# FASCICULE DE BREVET EUROPEEN

(11) **EP 4 320 673 B1**
(45) Date de publication et mention de la délivrance du brevet: **20.11.2024**
(21) Numéro de dépôt: 22721315.4
(22) Date de dépôt: 07.04.2022
(51) Int. Cl.: H01M 10/60, H01M 10/65, H01M 10/64, H01M 10/643, H01M 10/653, H01M 10/6556, H01M 10/6557, H01M 10/6568, H01M 10/625

(54) **DISPOSITIF DE TRAITEMENT THERMIQUE POUR UN ELEMENT ELECTRIQUE ET/OU ELECTRONIQUE**
WÄRMEMANAGEMENTVORRICHTUNG FÜR EIN ELEKTRISCHES UND/ODER ELEKTRONISCHES BAUTEIL
HEAT MANAGEMENT DEVICE FOR AN ELECTRICAL AND/OR ELECTRONIC COMPONENT

(30) Priorité: 07.04.2021 FR 2103556
(43) Date de publication de la demande: 14.02.2024
(73) Titulaire: Valeo Systemes Thermiques, 78320 Le Mesnil Saint Denis (FR)
(72) Inventeur: DE VAULX, Cedric, 78322 Le Mesnil-Saint-Denis Cedex (FR); AZZOUZ, Kamel, 78322 Le Mesnil-Saint-Denis Cedex (FR); BLANDIN, Jeremy, 78322 Le Mesnil-Saint-Denis Cedex (FR); BRAVO, Yolanda, 78322 Le Mesnil-Saint-Denis Cedex (FR)
(74) Mandataire: Valeo Systèmes Thermiques
(86) Numéro de dépôt international: PCT/EP2022/059195
(87) Numéro de publication internationale: WO 2022/214574

(56) Documents cités:
- WO-A1-2019/221723
- CN-A- 111 934 053
- US-A1- 2021 226 280
- US-A1- 2022 006 135

## Description

La présente invention porte sur un dispositif de traitement thermique pour un élément électrique et/ou électronique, par exemple un élément de batterie apte à équiper un dispositif de stockage électrique, notamment pour véhicule automobile. Les éléments électriques et/ou électroniques d'un système électronique susceptible d'être concerné par la présente invention peuvent aussi bien consister en des composants de serveurs informatiques qu'en des composants de systèmes de stockage d'énergie électrique, notamment des batteries, pour des véhicules automobiles.

Dans le domaine des véhicules automobiles, les dispositifs de stockage électrique, autrement appelés batteries, peuvent être utilisés au sein de véhicules afin d'assurer l'alimentation de diverses fonctions desdits véhicules. Les dispositifs de stockage électriques habituellement utilisés comprennent au moins une cellule de batterie destinée à stocker et/ou délivrer une énergie électrique. Le fonctionnement de ces dispositifs de stockage électriques provoque une augmentation de leurs températures. En effet, la cellule de batterie en fonctionnement, aussi bien pour délivrer de l'énergie électrique ou pour être rechargée, dégage une quantité importante de calories ayant pour effet d'augmenter la température du dispositif de stockage électrique, et pouvant à terme diminuer les performances du dispositif de stockage électrique et/ou l'endommager. CN 111934053 A divulgue un dispositif de traitement thermique d'un dispositif de stockage électrique,

Ainsi, afin de contrôler la température des dispositifs de stockage électriques au moins lors de leur fonctionnement, ceux-ci peuvent être associés à des dispositifs de traitement thermiques. Les dispositifs de traitement thermiques permettent par exemple de diminuer la température de la cellule de batterie du dispositif de stockage électrique lors du fonctionnement de cette dernière. Dans le cas où les dispositifs de stockage électriques ont pour fonction d'alimenter un réseau basse tension associé à des accessoires électriques du véhicule, les problématiques de refroidissement sont simples à mettre en oeuvre, notamment parce que lesdits dispositifs de stockage électriques présentent des volumes relativement faibles.

Cependant, dans le cas où les dispositifs de stockage électriques sont utilisés dans le cadre de véhicules électriques ou hybrides, notamment pour leur propulsion électrique, lesdits dispositifs de stockage électriques présentent des volumes importants. Ainsi, les problématiques de refroidissement de ces dispositifs de stockage électriques, pour voitures électriques ou hybrides, sont plus complexes à mettre en oeuvre.

Le but de la présente invention est d'offrir une alternative aux dispositifs de régulation thermique des systèmes électroniques comportant des composants électriques et/ou électroniques, qu'il s'agisse de serveurs informatiques, de batteries de véhicules automobiles ou de tout autre type de systèmes électroniques dont les composants sont susceptibles de s'échauffer lors de leur fonctionnement ou de leur recharge, en proposant un dispositif de régulation thermique qui soit susceptible d'amener le composant électrique ou électronique à la température souhaitée dans un temps défini. On cherche ainsi à améliorer les performances des dispositifs de traitement thermiques utilisés pour réguler la température des systèmes électroniques notamment lorsque ces derniers présentent un volume important, par exemple pour des batteries utilisées pour la propulsion d'un véhicule électrique ou hybride.

L'invention porte donc sur un dispositif de traitement thermique d'au moins un élément électrique et/ou électronique comprenant au moins une pièce de support rigide, une plaque de récupération de fluide et une plaque de répartition de fluide, chacune desdites plaques étant disposée de part et d'autre de la pièce de support rigide suivant une direction verticale de ladite pièce de support rigide, le dispositif de traitement thermique étant caractérisé en ce que la pièce de support rigide comprend au moins une cavité de réception de l'au moins un élément électrique et/ou électronique et au moins un canal formé parallèlement à la cavité de réception selon la direction verticale et participant à former un moyen de régulation thermique.

Les cavités de réception et les canaux formés dans la pièce de support rigide, qui s'étendent chacun principalement selon la direction verticale, sont distincts les uns des autres, de telle sorte que les volumes qu'ils définissent respectivement ne communiquent pas entre eux.

La pièce de support rigide a pour fonction de former une pièce intermédiaire entre le moyen de régulation thermique, formé au moins en partie par le canal, et l'élément électrique et/ou électronique logé dans la cavité de réception, permettant d'assurer le positionnement des éléments électriques et/ou électroniques les uns par rapport aux autres et de transmettre par diffusion les calories et/ou frigories des moyens de régulation thermique à chacun des éléments électriques et/ou électroniques.

Le dispositif de traitement thermique peut être utilisé pour un système électronique sous forme de dispositif de stockage électrique, autrement appelé batterie, d'un véhicule automobile, avec des éléments électriques et/ou électroniques qui prennent la forme de cellules de batterie. Le dispositif de traitement thermique a alors pour fonction de réguler la température de la cellule de batterie, par exemple lors de son fonctionnement en le refroidissant, ou lors du démarrage de la batterie en la préchauffant.

Selon une caractéristique de l'invention, la pièce de support rigide est faite d'un matériau à haute conductivité thermique. La pièce de support rigide est réalisée avec un tel matériau à haute conductivité thermique pour jouer spécifiquement le rôle de diffuseur de calories, que ce soit pour des effets de réchauffement ou de refroidissement des cellules. On entend par matériau à haute conductivité thermique le fait qu'à 20°C, la conductivité thermique du matériau choisi est d'au moins 120W/m/K. Dans le cas éventuel d'une pièce de support rigide réalisée avec un alliage de plusieurs matériaux, on peut comprendre que la valeur de conductivité thermique est à considérer comme la moyenne des valeurs de conductivité thermique de chaque matériau. Selon un exemple non limitatif de l'invention, le matériau à haute conductivité thermique comprend de l'aluminium.

Selon une caractéristique de l'invention, la cavité de réception et le canal de la pièce de support rigide débouchent de part et d'autre de ladite pièce de support rigide suivant sa direction verticale.

On comprend alors que la cavité de réception et le canal, qui s'étendent le long d'une direction transversale de la pièce de support rigide, sont à chacune de leur extrémité transversale en communication avec un environnement extérieur de la pièce de support rigide. A titre d'exemple non limitatif, la pièce de support rigide peut être réalisée par un procédé d'extrusion permettant d'obtenir le caractère traversant de la cavité de réception et du canal, la direction d'extrusion correspondant à la direction verticale le long de laquelle s'étendent la cavité de réception et le canal.

Selon une caractéristique de l'invention, la pièce de support rigide comporte une pluralité de canaux formés dans la pièce de support rigide en étant répartis régulièrement autour de la cavité de réception. Il résulte de cet agencement, avec les canaux régulièrement répartis et s'étendant sur toute la dimension verticale de la cavité, une régulation thermique homogène autour de la cavité et donc, par diffusion thermique via le matériau formant la pièce de support rigide, une régulation thermique homogène de l'élément électrique et/ou électronique logé dans cette cavité.

Selon une caractéristique de l'invention, la plaque de répartition de fluide comprend au moins une surépaisseur formant saillie d'une face interne en regard de la pièce de support rigide et percée d'une ouverture, la plaque de répartition de fluide étant disposée contre la pièce de support rigide de telle sorte que ladite ouverture soit disposée au droit de la au moins une cavité de réception de la pièce de support rigide, et de telle sorte que ladite surépaisseur soit en contact de la pièce de support rigide entre ladite cavité de réception et le canal.

Plus particulièrement, le contact entre la pièce de support rigide et la surépaisseur est étanche. On tire notamment avantage d'un tel contact étanche en ce qu'il permet d'isoler fluidiquement la cavité de réception lorsque le canal participant à former le moyen de régulation thermique reçoit un fluide de refroidissement et/ou un fluide chauffant.

Le fluide peut notamment consister en du liquide de refroidissement, par exemple de l'eau glycolée, ou du fluide réfrigérant, par exemple du 1234YF ou 134A. On entend par fluide chauffant, un fluide destiné à réchauffer, qui peut consister en un liquide de refroidissement apporté à une température supérieure à la température à un instant T de l'élément à réguler thermiquement.

Selon une caractéristique de l'invention, la plaque de répartition de fluide comprend un bord relevé, l'au moins une surépaisseur et le bord relevé participant à délimiter au moins une conduite de circulation d'un fluide en communication fluidique avec le au moins un canal.

Lorsque la pièce de support rigide comporte une pluralité de canaux, la conduite de circulation formée dans la plaque de répartition est apte à communiquer avec plusieurs de ces canaux de sorte que le fluide amené à circuler dans la conduite peut être guidé vers chacun des canaux destinés à recevoir spécifiquement ce fluide.

Selon une caractéristique de l'invention, la surépaisseur présente une forme de section hexagonale au centre de laquelle est disposée l'ouverture.

Dans une configuration où la plaque de répartition de fluide comprend une pluralité de surépaisseurs, chaque surépaisseur est disposée à une distance non nulle des surépaisseurs adjacentes de manière à former un passage pour le fluide entre les surépaisseurs et participer ainsi à former la conduite de circulation du fluide avec le bord relevé. Dans le contexte de surépaisseurs avec une section hexagonale, la plaque de répartition de fluide et la conduite de circulation du fluide présentent une forme en nid d'abeille.

Selon une caractéristique de l'invention, la plaque de répartition de fluide comprend une entrée fluidique en communication fluidique avec la conduite de circulation du fluide.

On comprend alors que dans le cas où le moyen de régulation thermique consiste en un canal traversé par un fluide de refroidissement et/ou chauffant, ce fluide est apte à circuler depuis l'entrée fluidique de la plaque de répartition, puis dans la conduite de circulation formée dans cette dernière pour atteindre le au moins un canal. Le canal s'étendant verticalement dans la pièce de support rigide, le fluide de refroidissement et/ou chauffant s'écoule dans ledit canal, parallèlement à la cavité de réception dans laquelle est logée un élément électrique et/ou électronique, jusqu'à atteindre la plaque de récupération de fluide disposée à l'opposé de la plaque de répartition de fluide suivant la direction verticale de la pièce de support rigide.

Selon une caractéristique de l'invention, la pièce de support rigide comprend au moins un trou de sortie traversant suivant sa direction verticale, la plaque de répartition de fluide comprenant au moins une sortie fluidique formée au droit du trou de sortie de la pièce de support rigide.

Le trou de sortie est débouchant de part et d'autre de la pièce de support rigide suivant sa direction verticale. On comprend alors que le trou de sortie est d'une part, au droit de la sortie fluidique de la plaque de répartition, et d'autre part débouchant sur la plaque de récupération de fluide. Ainsi, le trou de sortie formé dans la pièce de support rigide et la sortie fluidique sont configurées pour évacuer le fluide de refroidissement et/ou chauffant hors du dispositif de traitement thermique. Plus précisément, une fois le fluide de refroidissement et/ou chauffant collecté par la plaque de récupération de fluide, ledit fluide de refroidissement et/ou chauffant est apte à circuler au travers du trou de sortie et au travers de la sortie fluidique.

Selon une caractéristique de l'invention, la plaque de répartition de fluide comprend une épaisseur supplémentaire dans laquelle est formée la sortie fluidique, au droit du trou de sortie de la pièce de support rigide. L'épaisseur supplémentaire forme alors une saillie de la face interne de la plaque de répartition de fluide de telle sorte que ladite épaisseur supplémentaire soit en contact de la pièce de support rigide. Le contact entre l'épaisseur supplémentaire et la pièce de support rigide peut alors être étanche de telle sorte que ladite épaisseur supplémentaire isole fluidiquement le trou de sortie et la sortie fluidique de la conduite de circulation.

Selon une caractéristique de l'invention, la plaque de récupération de fluide présente une forme en baignoire, au moins une plaque de fermeture étant disposée entre la pièce de support rigide et la plaque de récupération de fluide, ladite plaque de fermeture étant configurée pour former une paroi de fermeture de la au moins une cavité de réception et pour comporter au moins une perforation disposée en regard du au moins un canal.

La forme en baignoire de la plaque de récupération permet de former un réservoir de stockage du fluide de refroidissement et/ou chauffant qui circule dans le au moins un canal jusqu'à la plaque de récupération de fluide.

On comprend alors que la plaque de fermeture permet d'isoler fluidiquement la cavité de réception du fluide de refroidissement ou chauffant qui s'écoule dans la plaque de récupération depuis le canal, via la perforation agencée à cet effet dans la plaque de fermeture. D'autre part, la plaque de fermeture participe au maintien du au moins un élément électrique et/ou électronique dans la au moins une cavité de réception de la pièce de support rigide. De la sorte, la paroi de fermeture est configurée pour autoriser le passage du fluide de refroidissement et/ou chauffant depuis le canal jusqu'à la plaque de récupération, et pour rendre étanche les cavités dans lesquelles sont logées les éléments électriques et/ou électroniques.

Selon une caractéristique de l'invention, la plaque de fermeture comprend au moins une découpe de sortie fluidique formée au droit du trou de sortie fluidique de la pièce de support rigide.

De la sorte on permet au fluide de refroidissement et/ou chauffant de circuler depuis le réservoir de stockage de la plaque de récupération de fluide jusqu'au trou de sortie formé dans la pièce de support rigide.

Selon une caractéristique de l'invention, au moins une feuille d'étanchéité est disposée entre la pièce de support rigide et l'une et/ou l'autre de la plaque de répartition du fluide et de la plaque de récupération de fluide, la feuille d'étanchéité étant percée localement pour former des orifices respectivement en regard de chaque canal de la pièce de support rigide.

Selon un exemple de l'invention, une première feuille d'étanchéité est disposée entre la pièce de support rigide et la plaque de répartition de fluide et une deuxième feuille d'étanchéité est disposée entre la pièce de support rigide et la plaque de récupération de fluide. Les feuilles d'étanchéité permettent notamment d'augmenter l'étanchéité du contact entre la pièce de support rigide et la plaque correspondante et d'augmenter ainsi l'étanchéité de la au moins une cavité de réception logeant l'au moins un élément électrique et/ou électronique en évitant que du fluide de refroidissement et/ou chauffant puisse atteindre cette cavité.

Selon une caractéristique de l'invention, au moins une gaine étanche s'étend dans le canal de la pièce de support rigide de telle sorte qu'il sépare ledit canal en deux volumes distincts et étanches l'un par rapport à l'autre.

Dans ce contexte, chacun des deux volumes distincts délimités par le canal de la pièce de support rigide et la gaine étanche peut participer à former des moyens de régulation thermiques distincts l'un de l'autre. Ainsi selon un exemple de l'invention, au sein du même canal, le moyen de régulation thermique peut comprendre un volume de circulation du fluide de refroidissement et un élément résistif dans le volume délimité par la gaine. On optimise ainsi le volume du canal et on augmente l'adaptabilité du dispositif de régulation thermique en lui permettant à la fois de refroidir et de chauffer l'élément électrique et/ou électronique logé dans la cavité de réception de la pièce de support rigide.

Dans ce même contexte, les canaux répartis régulièrement autour d'une cavité de réception peuvent être répartis avec une alternance de canaux comportant une gaine étanche et un élément résistif en son sein et de canaux ne comportant pas de gaine et traversés par un fluide, notamment de refroidissement.

Selon une caractéristique de l'invention, la pièce de support rigide comprend au moins le canal en périphérie de la cavité de réception formant un premier canal et comprend également au moins un deuxième canal formé en périphérie de la cavité de réception et distinct du premier canal, le deuxième canal étant isolé fluidiquement de la conduite de circulation du fluide.

Selon une caractéristique de l'invention, chacun du premier canal et du deuxième canal participent à former un des moyens de régulation thermiques de la pièce de support rigide, les moyens de régulation thermiques étant distincts l'un de l'autre.

Ainsi selon un exemple de l'invention, le premier canal peut permettre le passage du fluide de refroidissement et le deuxième canal peut loger un élément chauffant, par exemple un élément résistif. Une telle caractéristique est notamment possible du fait de l'isolation fluidique entre le premier canal et le deuxième canal et également du fait de l'isolation fluidique entre la conduite de circulation et le deuxième canal.

Selon un autre exemple de l'invention, la plaque de répartition de fluide peut comprendre une première conduite de circulation et une deuxième conduite de circulation, distinctes l'une de l'autre et en communication fluidique respectivement du premier canal et du deuxième canal. De la sorte on permet la circulation du fluide de refroidissement dans la première conduite de circulation et le premier canal et la circulation du fluide chauffant dans la deuxième conduite de circulation et le deuxième canal.

Selon une caractéristique de l'invention, au moins une interface conductrice de chaleur s'étend dans la cavité de réception de la pièce de support rigide, ladite interface conductrice de chaleur étant destinée à être disposée entre la pièce de support rigide et l'élément électrique et/ou électronique.

L'interface conductrice de chaleur a notamment pour fonction de limiter la présence d'air entre la cellule de batterie et la pièce de support rigide au niveau de la cavité de réception, et donc d'améliorer l'échange de chaleur entre la pièce de support rigide et la cellule de batterie. L'interface conductrice de chaleur peut alors prendre par exemple la forme d'une lame flexible de graphite laminée assurant le contact entre la cellule de batterie et la pièce de support rigide.

L'invention porte par ailleurs sur un système électronique comprenant au moins un élément électrique et/ou électronique et un dispositif de traitement thermique selon les caractéristiques précédentes. Ce système électronique peut notamment consister en une batterie de véhicule automobile, avec des éléments électriques et/ou électroniques prenant la forme de cellules de batterie.

D'autres caractéristiques, détails et avantages de l'invention ressortiront plus clairement à la lecture de la description donnée ci-après à titre indicatif en relation avec des dessins dans lesquels :
[Fig 1] est une vue générale schématique d'un système électronique, ici sous forme d'un dispositif de stockage électrique, comprenant au moins un dispositif de traitement thermique selon l'invention ;
[Fig 2] est une vue d'une première face d'une pièce de support rigide du dispositif de traitement thermique de la figure 1, montrant une pluralité de cavités de réception d'un élément électrique et/ou électronique et une pluralité de canaux participant à former un moyen de régulation thermique ;
[Fig 3] est une vue en perspective d'une plaque de répartition de fluide du dispositif de traitement thermique de la figure 1 ;
[Fig 4] est une vue éclatée d'une partie du dispositif de traitement thermique de la figure 1, montrant la pièce de support rigide, la plaque de répartition de fluide et une première feuille d'étanchéité ;
[Fig 5] est une vue éclatée d'une partie du dispositif de traitement thermique de la figure 1 montrant la pièce de support rigide, une deuxième feuille d'étanchéité, une plaque de fermeture et une plaque de récupération de fluide ;
[Fig 6] est une vue schématique d'un canal de la pièce de support rigide de la figure 2, selon autre exemple de réalisation, comprenant au moins une gaine et un élément résistif.

Il faut tout d'abord noter que si les figures exposent l'invention de manière détaillée pour sa mise en oeuvre, ces figures peuvent bien entendu servir à mieux définir l'invention, le cas échéant. Il est également à noter que ces figures n'exposent que des exemples de réalisation de l'invention. Enfin, les mêmes repères désignent les mêmes éléments dans l'ensemble des figures.

Dans ce qui va suivre, un dispositif de traitement thermique va être plus particulièrement décrit pour un système électronique sous forme de batterie de véhicule automobile, avec des éléments électriques et/ou électroniques sous forme de cellules de batterie. Mais il convient de noter que la description qui va suivre peut s'entendre avec des systèmes électroniques d'un autre genre, comme des serveurs informatiques par exemple.

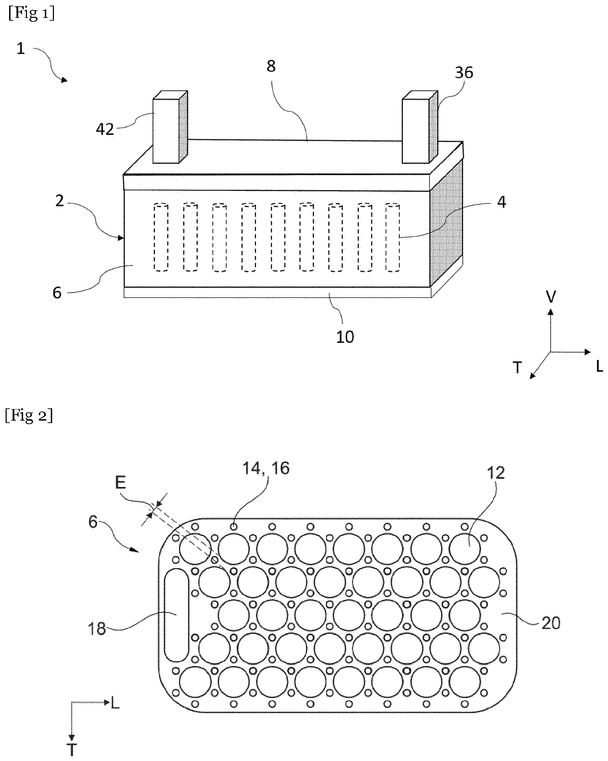

La figure 1 illustre un dispositif de stockage électrique 1, autrement appelé batterie 1, pour un véhicule. Ce dispositif de stockage électrique 1 comprend au moins un dispositif de traitement thermique 2 selon l'invention et au moins une cellule de batterie 4. Dans l'exemple illustré de l'invention, le dispositif de stockage électrique 1 comprend une pluralité de cellules de batteries 4. Le dispositif de traitement thermique 2 a notamment pour fonction de réguler la température des cellules de batterie 4, que cela soit lors du fonctionnement ou au du démarrage du véhicule. Selon la configuration du dispositif de traitement thermique 2, celui-ci peut lors du fonctionnement du dispositif de stockage électrique 1, refroidir les cellules de batterie 4 afin d'éviter par exemple les phénomènes de surchauffe pouvant à terme endommager le dispositif de stockage électrique 1, et/ou préchauffer les cellules de batterie 4 avant le démarrage du véhicule. Le dispositif de traitement thermique 2 permet donc d'optimiser l'utilisation du dispositif de stockage électrique 1 en limitant sa détérioration et par conséquent celle des cellules de batterie 4.

Le dispositif de traitement thermique 2 selon l'invention, comprend au moins une pièce de support rigide 6, configurée pour supporter les cellules de batterie, ainsi qu'une plaque de répartition de fluide 8 et une plaque de récupération de fluide 10, chacune desdites plaques 8, 10 étant disposée de part et d'autre de la pièce de support rigide 6 suivant une direction verticale V du dispositif de traitement thermique.

La pièce de support rigide 6 va maintenant être décrite en rapport avec la figure 2. La pièce de support rigide 6 comprend au moins une cavité de réception 12, ici une pluralité de cavités de réception 12, apte à loger respectivement une des cellules de batterie 4. Chacune des cavités de réception 12 forme alors un logement, ici cylindrique de section circulaire, afin de présenter une forme complémentaire avec les cellules de batterie 4 que la cavité de réception 12 est destinée à loger, les cellules de batterie 4 étant ici également cylindrique. Dans l'exemple illustré de l'invention, l'axe d'extension principal des cavités de réception 12 est parallèle à la direction verticale V de la pièce de support rigide 6. Plus particulièrement, la pluralité de cavités de réception 12 est ouverte de part et d'autre de la pièce de support rigide 6 selon sa direction verticale V, c'est-à-dire que la cavité de réception 12 est ouverte sur l'environnement extérieur de la pièce de support rigide 6 selon sa direction verticale V.

Selon un exemple de l'invention, la pièce de support rigide peut être réalisée par une opération d'extrusion permettant de former la cavité de réception traversante, c'est-à-dire qui débouche de part et d'autre de ladite pièce de support rigide.

Tel que cela est visible à la figure 2, la pièce de support rigide 6 comprend une pluralité de cavités de réception 10 tel que défini précédemment. Dans l'exemple illustré, les cavités de réception 10 sont agencées de telle sorte qu'elles soient alignées le long d'au moins deux droites longitudinales distinctes, perpendiculaires à la direction verticale V de la pièce de support rigide 6. On comprend donc que la pièce de support rigide 6 comprend une pluralité de cavités de réception 10 agencées en matrice. Plus particulièrement, dans cet exemple, les cavités de réception 10 alignées le long d'une des droites longitudinales sont agencées en quinconce par rapport aux cavités de réception 10 alignées le long de l'autre droite longitudinale. On tire alors avantage de la disposition en quinconce des cavités de réception les unes par rapport aux autres, en ce qu'elle permet de conserver une épaisseur de la matière à haute conductivité thermique de la pièce de support rigide suffisante pour assurer la régulation thermique des cellules de batterie. Dit autrement, on définit un écartement E minimal des cellules de batterie entre elles, pris entre deux cellules de batterie adjacentes, l'écartement E entre deux cellules de batterie adjacentes permettant d'éviter le transfert de calories d'une cellule de batterie à l'autre.

La pièce de support rigide 6 comprend par ailleurs au moins un canal 14 formé parallèlement à l'une des cavités de réception 12, selon la direction verticale V de ladite pièce de support rigide 6, ledit canal 14 participant à former un moyen de régulation thermique 16. Selon l'exemple illustré de l'invention, la pièce de support rigide 6 comprend une pluralité de canaux 14 formés parallèlement à la pluralité de cavités de réception 12 des cellules de batterie 4, suivant la direction verticale V de la pièce de support rigide 6. Ainsi, chacun des canaux 14 de la pluralité de canaux 14 s'étend suivant la direction verticale V de la pièce de support rigide 6 et de telle sorte qu'ils débouchent de part et d'autre de ladite pièce de support rigide 6 selon sa direction verticale V. On comprend donc que chacun des canaux 14 de la pièce de support rigide 6 est ouvert sur l'environnement extérieur de ladite pièce de support rigide 6 selon sa direction verticale V.

Notamment et tel que cela est visible sur la figure 2, la pluralité de canaux 14 est configurée de telle sorte que plusieurs des canaux 14 sont respectivement agencés autour d'une même cavité de réception 12, en étant régulièrement répartis autour de cette cavité. Il résulte de cet agencement, avec les canaux régulièrement répartis et s'étendant sur toute la dimension verticale de la cavité, une régulation thermique homogène autour de la cavité et donc, par diffusion thermique via le matériau formant la pièce de support rigide, une régulation thermique homogène de la cellule de batterie logée dans cette cavité. Dans cet agencement, avec la disposition matricielle des cavités de réception, un canal 14 peut être commun à deux cavités de réception adjacentes.

La pièce de support rigide 6 comprend par ailleurs au moins un trou de sortie 18 traversant suivant la direction verticale V de la pièce de support rigide 6. On comprend donc que le trou de sortie 18 est ouvert verticalement à chacune de ses extrémités sur l'environnement extérieur de la pièce de support rigide 6, et plus particulièrement, tel que cela sera détaillé ci-après, sur la plaque de répartition de fluide 8 et sur la plaque de récupération de fluide 10. Le trou de sortie 18 est notamment formé en périphérie de la pluralité de canaux 14 et de la pluralité de cavités de réception 12, et de telle sorte que ledit trou de sortie 18 soit formé aux alentour d'un bord périphérique de la pièce de support rigide 6.

Selon un exemple de l'invention non limitatif, la pièce de support rigide 6 peut être réalisée par une opération d'extrusion, ce qui permet de former traversantes la pluralité de cavités de réception 12 et la pluralité de canaux 14 ainsi que le trou de sortie 18.

Dans la description détaillée des figures qui va suivre, on considère que le moyen de régulation thermique 16 est formé par les canaux 14 formés dans la pièce de support rigide 6 et par un fluide réfrigérant et/ou chauffant qui circule au moins en partie dans lesdits canaux 14. Les canaux 14 participent ainsi à former un moyen de régulation thermique, que celui-ci soit apte à chauffer ou refroidir la cellule de batterie logée dans la cavité de réception voisine des canaux, selon le type de fluide circulant dans ces canaux. Il convient toutefois de noter que cet exemple de réalisation de l'invention où chaque canal est traversé par un fluide de refroidissement et/ou un fluide chauffant n'est pas limitatif de l'invention et une variante de réalisation avec des éléments résistifs logés dans au moins certains des canaux sera donnée dans un deuxième temps.

La pièce de support rigide présente une première face 20 et une deuxième face 22, opposées l'une à l'autre suivant la direction verticale V de ladite pièce de support rigide 6, c'est-à-dire la direction d'extension principale des cavités et des canaux. La plaque de répartition de fluide 8 est alors disposée contre la première face 20 de la pièce de support rigide 6 tandis que la plaque de récupération de fluide 10 est disposée contre la deuxième face 22 de la pièce de support rigide 6. Tel qu'évoqué, le trou de sortie 18, chacune de la pluralité de cavités de réception 12 et chacun des canaux 14 de la pluralité de canaux 14 sont traversants et sont donc ouverts au niveau de la première face 20 et de la deuxième face 22 de la pièce de support rigide 6.

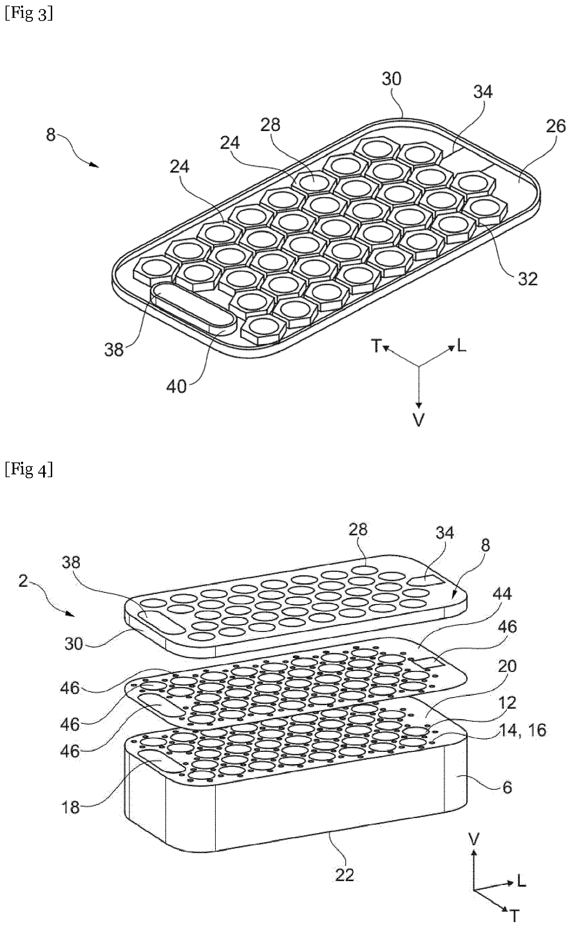

La plaque de répartition de fluide 8 va maintenant être décrite plus en détail, en rapport avec les figures 3 et 4. Tel que cela est visible dans l'exemple de l'invention illustré à la figure 3, la plaque de répartition de fluide 8 comprend au moins une surépaisseur 24 formant saillie d'une face interne 26 de ladite plaque de répartition de fluide 8. La face interne 26 de la plaque de répartition de fluide 8 est la face destinée à être positionnée en regard de la première face 20 de la pièce de support rigide 6. Selon l'exemple illustré, la plaque de répartition de fluide 8 comprend une pluralité de surépaisseurs 24 présentant chacune une forme de section hexagonale.

Une ouverture 28 est formée au centre de chacune des surépaisseurs 24 de la plaque de répartition de fluide 8. Lorsque la plaque de répartition de fluide est rendue solidaire de la pièce de support rigide 6, par exemple par soudage ou brasage, ces ouvertures 28 formées dans les surépaisseurs 24 de la plaque de répartition de fluide 8 sont respectivement disposées au droit d'une des cavités de réception 12 de la pièce de support rigide 6. En d'autres termes, chaque ouverture 28 s'étend dans la continuité axiale, ici verticale, d'une cavité de réception. De la sorte, il est possible, un fois la plaque de répartition de fluide fixée sur la pièce de support rigide, d'insérer la cellule de batterie correspondante dans la cavité de réception, en passant par l'ouverture 28. Par ailleurs, chacune des surépaisseurs 24 de la plaque de répartition de fluide 8 fait saillie de cette dernière de telle sorte que lesdites surépaisseurs 24 soient au contact de la première face 20 de la pièce de support rigide 6 lorsque la plaque de répartition de fluide 8 est disposée contre ladite première face 20. Plus précisément, chacune des surépaisseurs 24 est disposée au contact de la première face 20 de la pièce de support rigide 6, au moins entre une des cavités de réception 12 et un des canaux 14 formés en périphérie de ladite cavité de réception 12. En d'autres termes, les surépaisseurs permettent de former une séparation entre la cavité de réception et les canaux qui l'entourent.

Tel que cela est visible sur la figure 3 notamment, les surépaisseurs 24 sont formées en saillie de la face interne 26 de la plaque de répartition de fluide 8 de manière à former des éléments indépendants les uns des autres, avec une distance non nulle entre chacune des surépaisseurs 24. De la sorte, et tel que cela sera détaillé ci-après, du fluide est susceptible de circuler entre les surépaisseurs. Lorsque la plaque de répartition de fluide est rendue solidaire de la pièce de support rigide 6, les espaces agencés entre les surépaisseurs sont disposés en regard des canaux, chaque canal 14 débouchant sur un espace agencé entre les surépaisseurs et n'étant ainsi pas recouvert par une surépaisseur. En d'autres termes, le fluide amené à circuler entre les surépaisseurs peut s'écouler dans les canaux, les surépaisseurs formant un rempart empêchant le fluide d'aller dans la cavité de réception entourée par ces canaux.

Selon une caractéristique de l'invention, le contact entre chacune des surépaisseurs 24 et la première face 20 de la pièce de support rigide 6 est étanche. On tire avantage d'une telle caractéristique lorsque le moyen de régulation thermique 16 comprend au moins le fluide de refroidissement et/ou chauffant qui circule au moins dans les canaux 14, les cavités de réception 12 étant fluidiquement isolées desdits canaux 14 et d'un volume délimité par la plaque de répartition de fluide 8. Les caractéristiques de circulation du fluide de refroidissement et/ou chauffant seront détaillées plus loin dans la suite de la description.

La plaque de répartition de fluide 8 comprend par ailleurs un bord relevé 30 qui s'étend en périphérie de ladite plaque de répartition de fluide 8. Le bord relevé 30 et la pluralité de surépaisseurs 24, espacées les unes des autres d'une distance non nulle, participent alors à délimiter une conduite de circulation 32 d'un fluide. On comprend de ce qui précède, et notamment de la forme particulière des surépaisseurs 24 de section hexagonale, que la conduite de circulation 32 présente une forme au moins en partie en nid d'abeilles. Le fluide circulant dans la conduite de circulation 32 peut alors être le fluide de refroidissement et/ou chauffant, qui en s'écoulant par la suite dans les canaux 14 participe à former le moyen de régulation thermique 16 évoqué précédemment.

Plus précisément, la conduite de circulation 32 s'étend entre le bord relevé 30 et la pluralité de surépaisseurs 24 et comporte donc les espaces agencés entre les surépaisseurs, de telle sorte que la conduite de circulation est en communication fluidique avec chacun des canaux 14 de la pièce de support rigide 6.

La plaque de répartition de fluide 8 comprend par ailleurs une entrée fluidique 34 formée de telle sorte qu'elle soit en communication fluidique avec la conduite de circulation 32. Notamment, l'entrée fluidique 34 est réalisé par un trou formé dans la plaque de répartition de fluide, sans bord relevé délimitant ce trou. On comprend donc que l'entrée fluidique 34 est en communication fluidique avec les canaux 14 de la pièce de support rigide 6. Selon l'exemple de l'invention de la figure 1, une conduite d'entrée fluidique 36 peut être disposée en recouvrement de l'entrée fluidique 34 de la plaque de répartition de fluide 8. Ainsi, la conduite d'entrée fluidique 36 est apte à distribuer le fluide de refroidissement et/ou chauffant jusqu'à la conduite de circulation 32 et aux canaux 14, via l'entrée fluidique 34.

La plaque de répartition de fluide 8 comprend par ailleurs une sortie fluidique 38, ici disposée à l'opposé de l'entrée fluidique 34. Cette sortie fluidique est formée sur la plaque de répartition de sorte que lorsque celle-ci est disposée contre la première face 20 de ladite pièce de support rigide 6, la sortie fluidique 38 est disposée au droit du trou de sortie 18 de la pièce de support rigide 6. Plus particulièrement, la plaque de répartition de fluide 8 comprend une épaisseur supplémentaire 40 faisant saillie de sa face interne 26, la sortie fluidique 38 étant formée dans ladite épaisseur supplémentaire 40. L'épaisseur supplémentaire 40 est alors formée de telle sorte qu'elle soit en contact de la première face 20 de la pièce de support rigide 6 lorsque la plaque de répartition de fluide 8 est disposée contre ladite première face 20. Plus précisément, l'épaisseur supplémentaire 40 de la plaque de répartition de fluide 8 présente un contact étanche avec la première face 20 de la pièce de support rigide 6.

De la sorte, l'épaisseur supplémentaire assure l'isolement fluidique du trou de sortie 18 et de la sortie fluidique 38, par rapport à la conduite de circulation 32 formée sur la plaque de répartition de fluide 8. Une conduite de sortie fluidique 42 est disposée en recouvrement de la sortie fluidique 38, tel que cela est illustré figure 1, afin d'évacuer le fluide de refroidissement et/ou chauffant du dispositif de traitement thermique 2.

Une première feuille d'étanchéité 44 peut être disposée entre la pièce de support rigide 6 et la plaque de répartition de fluide 8. La première feuille d'étanchéité 44 est alors percée de telle sorte qu'elle présente une pluralité de premiers orifices 46 formés au droit des cavités de réception 12 et des canaux 14. Ces premiers orifices 46 présentent des dimensions différentes selon qu'ils sont destinés à être en regard d'une cavité de réception 12 ou d'un canal 14. On comprend que les premiers orifices en regard des canaux sont destinés à ne pas gêner la communication fluidique entre la conduite de circulation 32 de la plaque de répartition de fluide 8 et les canaux 14 de la pièce de support rigide 6, et que les premiers orifices en regard des cavités de réception sont destinés à en pas gêner le passage des cellules de batterie pour venir se loger dans les cavités de réception 12.

Un des premiers orifices 46 de la première feuille d'étanchéité 44 peut également être formé en regard de l'entrée fluidique 34 de la plaque de répartition de fluide 8 pour ne pas gêner le passage de fluide en direction de la conduite de circulation, et un des premiers orifices 46 peut également être formé en regard du trou de sortie 18 de la pièce de support rigide 6 et de la sortie fluidique 38 de la plaque de répartition de fluide 8.

La première feuille d'étanchéité 44 participe à augmenter l'étanchéité entre la plaque de répartition de fluide 8 et la pièce de support rigide 6, notamment au niveau des surépaisseurs 24 et de l'épaisseur supplémentaire 40 disposées au contact de la première face 20 de la pièce de support rigide 6, sans que ladite première feuille d'étanchéité 44 ne forme un obstacle dans les communications fluidiques évoquées ci-dessus.

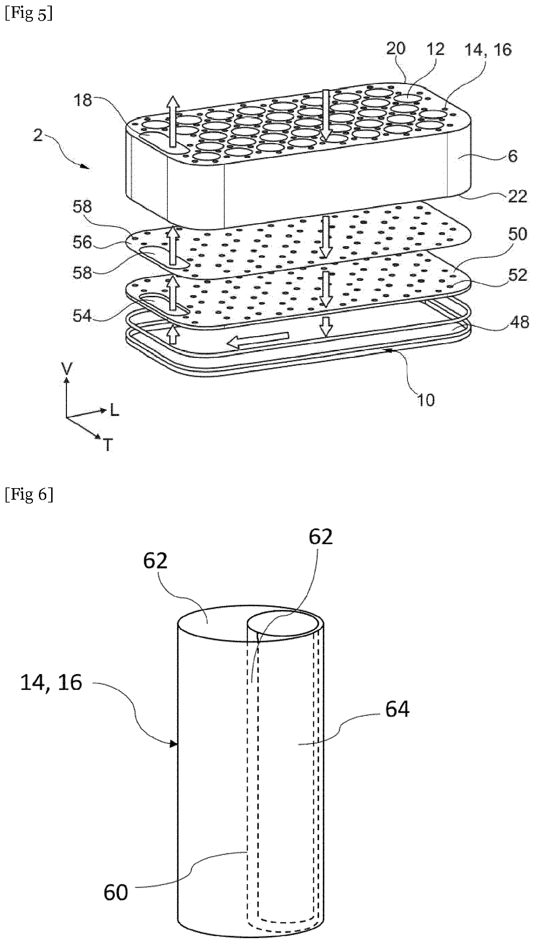

Le dispositif de traitement thermique 2 comprend également la plaque de récupération de fluide 10 disposée contre la deuxième face 22 de la pièce de support rigide 6, et particulièrement visible à la figure 5.

La plaque de récupération de fluide 10 présente une forme en baignoire permettant de délimiter un réservoir de stockage 48 pour récolter le fluide de refroidissement et/ou chauffant qui circule dans les canaux 14 de la pièce de support rigide 6. Le contact entre la plaque de récupération de fluide 10 et la pièce de support rigide 6 est rendu étanche lors de la fixation de cette plaque et du support, notamment sur leur périphérie, de telle sorte que le fluide de refroidissement et/ou chauffant traversant la pièce de support rigide via les canaux reste contenu dans le réservoir de stockage 48 de ladite plaque de récupération de fluide 10.

Tel que cela est visible à la figure 5, une plaque de fermeture 50 est disposée entre la pièce de support rigide 6 et la plaque de récupération de fluide 10.

La plaque de fermeture 50 est configurée pour permettre la fermeture des cavités de réception 12 de la pièce de support rigide 6 au niveau de sa deuxième face 22. On comprend alors que la plaque de fermeture 50 permet d'une part de participer à l'étanchéité des cavités de réception 12 par rapport au réservoir de stockage 48 de la plaque de récupération de fluide 10, et d'autre part de participer au maintien des cellules de batterie au sein des cavités de réception 12 de la pièce de support rigide 6.

Par ailleurs, la plaque de fermeture 50 comprend au moins une perforation 52, qui est disposée dans le prolongement vertical d'un des canaux 14 de la pièce de support rigide 6 lorsque le dispositif de traitement thermique 2 est assemblé, cette perforation permettant d'autoriser le passage du fluide de refroidissement et/ou chauffant depuis ledit canal 14 jusqu'au réservoir de stockage 48 de la plaque de récupération de fluide 10. Selon un exemple de l'invention, la plaque de fermeture 50 comprend autant de perforations 52 que la pièce de support rigide 6 comprend de canaux 14, chacune des perforations 52 étant disposée au droit d'un desdits canaux 14, c'est-à-dire dans le prolongement vertical du canal correspondant.

La plaque de fermeture 50 comprend par ailleurs au moins une découpe de sortie fluidique 54 formée au droit du trou de sortie 18 de la pièce de support rigide 6. Une telle découpe de sortie fluidique 54 assure la communication fluidique entre le réservoir de stockage 48 de la plaque de récupération de fluide 10 et le trou de sortie 18 de la pièce de support rigide 6. De la sorte, le fluide qui a été récupéré dans le réservoir de stockage après avoir traversé la pièce de support rigide via les canaux 14 est apte à être dirigé à l'extérieur du dispositif de traitement thermique via la découpe de sortie et le trou de sortie 18.

Une deuxième feuille d'étanchéité 56 est disposée entre la pièce de support rigide 6 et la plaque de récupération de fluide 10. Plus précisément, la deuxième feuille d'étanchéité 56 est disposée entre la plaque de fermeture 50 et la pièce de support rigide 6. La deuxième feuille d'étanchéité 56 est alors percée localement de telle sorte qu'elle présente des deuxièmes orifices 58 formés respectivement en regard d'au moins un des canaux 14 de la pièce de support rigide 6. Selon l'exemple illustré de la figure 5, la deuxième feuille d'étanchéité 56 est percée en regard de chacun des canaux 14 de la pièce de support rigide 6 de telle sorte que lorsque le dispositif de traitement thermique 2 est assemblé, chacun des canaux 14 soit au droit d'un deuxième orifice 58 de la deuxième feuille d'étanchéité 56. De la sorte, la deuxième feuille d'étanchéité 56 autorise la communication fluidique entre les canaux 14 et le réservoir de stockage 48 de la plaque de récupération de fluide 10.

Par ailleurs, la deuxième feuille d'étanchéité 56 est percée en regard du trou de sortie 18 de la pièce de support rigide 6 de telle sorte que le deuxième orifice 58 formé en regard du trou de sortie 18 autorise la communication fluidique entre le réservoir de stockage 48 de la plaque de récupération de fluide 10 et ledit trou de sortie 18.

On comprend alors que la deuxième feuille d'étanchéité 56 participe à garantir l'étanchéité entre la plaque de fermeture 50 et la deuxième face 22 de la pièce de support rigide 6, en augmentant l'isolation fluidique des cavités de réception 12 au niveau de la deuxième face 22 de la pièce de support rigide 6, tout en autorisant le passage du fluide de refroidissement et/ou chauffant en provenance des canaux au travers de ladite deuxième feuille d'étanchéité 56.

La circulation du fluide de refroidissement et/ou chauffant au sein du dispositif de traitement thermique 2 va maintenant être décrit plus en détail au moyen des figures 1 à 5, en référence à un exemple où le dispositif de traitement thermique 2 selon l'invention comporte un moyen de régulation thermique 16 comprenant les canaux et un fluide de refroidissement et/ou un fluide chauffant circulant dans ces canaux.

Le fluide destiné à réaliser la régulation thermique appropriée, à savoir un fluide de refroidissement lorsqu'il s'agit de baisser la température des cellules de batterie ou un fluide de chauffage lorsqu'il s'agit de préchauffer les cellules de batterie, est acheminé dans le dispositif de traitement thermique 2 au moyen de la conduite d'entrée fluidique 36. Plus précisément, le fluide de refroidissement et/ou chauffant circule dans la conduite d'entrée fluidique 36 puis traverse l'entrée fluidique 34 de la plaque de répartition de fluide 8 pour atteindre la conduite de circulation 32.

Une fois le fluide présent dans la conduite de circulation 32 formée entre la face interne 26 de la plaque de répartition de fluide 8 et la pièce de support rigide, ce fluide est apte à s'écouler entre les surépaisseurs 24, sur toute l'étendue de la plaque de répartition de fluide. Dans ce contexte, la conduite de circulation 32 permet la distribution du fluide dans chacun des canaux 14 de la pièce de support rigide 6 qui débouche au niveau de la première face 20 dans cette conduite de circulation. Le fluide de refroidissement et/ou le fluide chauffant traverse alors la pièce de support rigide 6 en s'écoulant verticalement le long des canaux 14, parallèlement à la cavité de réception 12. Le différentiel de température entre le fluide de refroidissement circulant dans un canal 14 et la cellule de batterie chaude présente dans la cavité de réception génère un échange de calories à travers la matière de la pièce de support rigide 6, et le fluide de refroidissement récupère des calories en se dirigeant vers la plaque de récupération de fluide 10. De manière analogue, le différentiel de température entre le fluide chauffant circulant dans un canal 14 et la cellule de batterie pas encore assez chaude présente dans la cavité de réception génère un échange de calories à travers la matière de la pièce de support rigide 6, et le fluide chauffant cède des calories en se dirigeant vers la plaque de récupération de fluide 10.

Tel que cela a pu être précisé précédemment, il est avantageux que des canaux 14 soient ainsi répartis régulièrement autour d'une cavité de réception, et sur toute la dimension verticale de cette cavité, de telle sorte que la récupération ou la cession de calories se fait de façon homogène sur toute l'étendue de la cellule de batterie présente dans la cavité de réception.

En d'autres termes, la circulation du fluide de refroidissement et/ou chauffant dans les canaux 14 permet respectivement de refroidir et/ou réchauffer les cellules de batteries 4 logées dans les cavités de réception 12 de la pièce de support rigide 6, par une diffusion à travers la matière de la pièce de support rigide des calories et/ou frigories générées par le moyen de régulation thermique 16, ici le fluide de refroidissement et/ou chauffant qui s'écoule dans les canaux 14. Afin d'optimiser l'échange thermique et le chauffage ou le refroidissement des cellules de batterie en fonction du type de fluide circulant dans les canaux, la pièce de support rigide 6 peut être faite d'un matériau à haute conductivité thermique. On entend alors par matériau à haute conductivité thermique le fait qu'à 20°C, la conductivité thermique du matériau à haute conductivité thermique choisi est d'au moins 120W/m/K.

Le fluide s'écoule ensuite dans le réservoir de stockage 48 de la plaque de récupération de fluide 10 en traversant au moins les perforations 52 de la plaque de fermeture 50. Une fois collecté dans le réservoir de stockage 48 de la plaque de récupération de fluide 10, le fluide de refroidissement et/ou chauffant est aspiré au travers de la découpe de sortie fluidique 54 de la plaque de fermeture 50, dans le trou de sortie 18 de la pièce de support rigide 6 au moyen de la conduite de sortie fluidique 42 disposée en recouvrement de la sortie fluidique 38 de la plaque de répartition de fluide 8. Le fluide de refroidissement et/ou chauffant est alors évacué en dehors du dispositif de traitement thermique 2.

On va maintenant décrire un autre mode de réalisation de l'invention, en se référant notamment à l'illustration de la figure 6. Le dispositif de traitement thermique diffère dans ce cas de ce qui vient d'être décrit en ce que la fonction de chauffe des cellules de batterie, précédemment réalisée par le passage de fluide chauffant dans les canaux 14, est ici réalisée par la présence et l'alimentation électrique d'éléments résistifs, présents dans tout ou partie des canaux 14. Il n'est dans ce contexte plus nécessaire de prévoir un fluide chauffant, mais uniquement un fluide de refroidissement, ce qui peut avoir pour mérite de simplifier l'installation d'alimentation de fluide en amont et aval du dispositif de traitement thermique.

Tel qu'illustré sur la figure 6, une gaine 60 s'étend dans au moins un des canaux 14 de la pièce de support rigide, de telle sorte que ladite gaine 60 sépare ledit canal 14 en deux volumes 62 distincts et étanches l'un par rapport à l'autre. La gaine 60 forme une enveloppe étanche pour un élément résistif 64, de sorte que cet élément résistif n'est pas au contact du volume interne du canal correspondant.

Selon une première variante de ce mode de réalisation, chacun des deux volumes 62 distincts formés dans l'un des canaux 14 participe à former un moyen de régulation thermique 16, avec l'élément résistif au sein de la gaine qui est alimenté le cas échéant pour former un moyen de régulation thermique apte à réchauffer la cellule de batterie dans la cavité de réception voisine, et avec le volume 62 du canal 14 distinct de la gaine 60 qui communique fluidiquement avec la conduite de circulation 32 de fluide alimentée cette fois exclusivement par du fluide de refroidissement.

Selon une deuxième variante de ce mode de réalisation, dans les canaux 14 qui comportent une gaine 60, aucun fluide n'est destiné à circuler, l'extrémité de ces canaux 14 débouchant sur la première face 20 étant recouverte pour empêcher la communication fluidique avec la conduite de circulation. Ces canaux comportant une gaine ont uniquement pour fonction de former un moyen de régulation thermique apte à chauffer la cellule de batterie voisine. Dans cette variante, il convient de prévoir une alternance dans la disposition des canaux autour d'une même cavité de réception, avec une alternance entre un canal comportant une gaine et un élément résistif et un canal sans gaine et destiné à être traversé par du fluide de refroidissement.

Dans chacune de ces variantes, l'élément résistif au sein de la gaine présente une extrémité de raccordement qui court entre la première face et la plaque de répartition de fluide jusqu'à un connecteur électrique étanche permettant l'alimentation électrique de l'élément résistif. L'extrémité de raccordement est isolée du ou des fluides susceptibles de circuler dans la conduite de circulation, par un prolongement de la gaine 60 dans cette conduite de circulation.

On tire alors avantage de ce mode de réalisation de l'invention en ce qu'il permet d'optimiser le volume des canaux 14 en permettant à ces derniers de comprendre des moyens de chauffage des cellules de batterie et des moyens de refroidissement des cellules de batterie, tout en simplifiant l'architecture hydraulique associée au dispositif de traitement thermique car limitée à la gestion d'un seul fluide.

D'autres variantes, ici non illustrées, peuvent être mises en oeuvre sans sortir du contexte de l'invention. A titre d'exemple non limitatif, le dispositif de traitement thermique peut comprendre une pluralité d'interfaces conductrices de chaleur respectivement disposées dans l'une des cavités de réception de la pièce de support rigide, de telle sorte qu'une interface conductrice soit disposée entre la pièce de support rigide et une cellule de batterie. L'interface conductrice de chaleur a alors pour fonction de faciliter la transmission par contact des calories et/ou frigories entre la pièce de support rigide et la cellule de batterie notamment en limitant l'air présent entre ces deux pièces, la présence d'air ayant pour effet d'isoler thermiquement la cellule de batterie.

L'interface conductrice de chaleur peut comporter un élément résistif, par exemple une feuille de nickel, relié à une alimentation électrique. De la sorte, l'interface conductrice de chaleur est apte à transmette des calories à la cellule de batterie, ledit élément résistif logé dans l'interface conductrice formant le premier moyen de régulation thermique.

Selon un autre exemple de variante, la plaque de répartition de fluide peut être configurée pour former deux conduites de circulation distinctes. Dans ce contexte, on peut définir une première conduite de circulation et une deuxième conduite de circulation dans lesquelles circulent respectivement un fluide de refroidissement et un fluide chauffant. Le dispositif de traitement thermique est alors particulier en ce que les canaux formés dans la pièce de support rigide sont répartis entre des premiers canaux et des deuxièmes canaux qui communiquent exclusivement et respectivement avec la première conduite de circulation et la deuxième conduite de circulation. Selon le fluide qui est envoyé en direction du dispositif de traitement thermique, on permet ainsi l'utilisation du dispositif de traitement thermique à la fois pour refroidir les cellules de batterie et également pour réchauffer lesdites cellules de batterie.

On tire avantage de l'invention telle qu'elle vient d'être décrite en ce qu'elle permet par des moyens simples à mettre en oeuvre et donc peu coûteux d'améliorer la régulation thermique d'au moins un élément électrique et/ou électronique, par exemple une cellule de batterie.

L'invention ne saurait toutefois se limiter exclusivement aux modes de réalisation et aux exemples de procédés décrits et illustrés, et s'applique également à tous moyens ou configurations, et à toute combinaison de tels moyens ou configurations, permettant de manière équivalente à améliorer la régulation thermique d'au moins un élément électrique et/ou électronique, dès lors qu'une combinaison entre un moyen de régulation thermique et une pièce rigide formant support de cet élément électrique et/ou électronique est mise en oeuvre.

## Revendications

1. Dispositif de traitement thermique (2) d'au moins un élément électrique et/ou électronique (4) comprenant au moins une pièce de support rigide (6), une plaque de récupération de fluide (10) et une plaque de répartition de fluide (8), chacune desdites plaques (8, 10) étant disposée de part et d'autre de la pièce de support rigide (6) suivant une direction verticale (V) de ladite pièce de support rigide (6), le dispositif de traitement thermique (2) étant **caractérisé en ce que** la pièce de support rigide (6) comprend au moins une cavité de réception (12) du au moins un élément électrique et/ou électronique (4) et au moins un canal (14) formé parallèlement à la cavité de réception (12) selon la direction verticale (V) et participant à former un moyen de régulation thermique (16).

2. Dispositif de traitement thermique (2) selon la revendication précédente, dans lequel la cavité de réception (12) et le canal (14) de la pièce de support rigide (6) débouchent de part et d'autre de ladite pièce de support rigide (6) suivant sa direction verticale (V).

3. Dispositif de traitement thermique (2) selon l'une des revendications précédentes, dans lequel la pièce de support rigide (6) comporte une pluralité de canaux (14) formés dans la pièce de support rigide (6) en étant répartis régulièrement autour de la cavité de réception (12).

4. Dispositif de traitement thermique (2) selon l'une quelconque des revendications précédentes, dans lequel la plaque de répartition de fluide (8) comprend au moins une surépaisseur (24) formant saillie d'une face interne (26) en regard de la pièce de support rigide (6) et percée d'une ouverture (28), la plaque de répartition de fluide (8) étant disposée contre la pièce de support rigide (6) de telle sorte que ladite ouverture (28) soit disposée au droit de la au moins une cavité de réception (12) de la pièce de support rigide (6), et de telle sorte que ladite surépaisseur (24) soit en contact de la pièce de support rigide (6) entre ladite cavité de réception (12) et le canal (14).

5. Dispositif de traitement thermique (2) selon la revendication précédente, dans lequel la plaque de répartition de fluide (8) comprend un bord relevé (30), l'au moins une surépaisseur (24) et le bord relevé (30) participant à délimiter au moins une conduite de circulation (32) d'un fluide en communication fluidique avec le au moins un canal (14).

6. Dispositif de traitement thermique (2) selon la revendication précédente, dans lequel la plaque de répartition de fluide (8) comprend une entrée fluidique (34) en communication fluidique avec la conduite de circulation (32) du fluide.

7. Dispositif de traitement thermique (2) selon l'une quelconque des revendications précédentes, dans lequel la plaque de récupération de fluide (10) présente une forme en baignoire, au moins une plaque de fermeture (50) étant disposée entre la pièce de support rigide (6) et la plaque de récupération de fluide (10), ladite plaque de fermeture (50) étant configurée pour former une paroi de fermeture de la au moins une cavité de réception (12) et pour comporter au moins une perforation (52) disposée en regard du au moins un canal.

8. Dispositif de traitement thermique (2) selon l'une quelconque des revendications précédentes, dans lequel au moins une feuille d'étanchéité (44, 56) est disposée entre la pièce de support rigide (6) et l'une et/ou l'autre de la plaque de répartition du fluide (8) et de la plaque de récupération de fluide (10), la feuille d'étanchéité (44, 56) étant percée localement pour former des orifices (46, 58) en regard du au moins un canal (14).

9. Dispositif de traitement thermique (2) selon l'une quelconque des revendications précédentes, dans lequel au moins une gaine (60) étanche s'étend dans le canal (14) de la pièce de support rigide (6) de telle sorte qu'il sépare ledit canal (14) en deux volumes (62) distincts et étanches l'un par rapport à l'autre.

10. Système électronique (1) de véhicule comprenant au moins un élément électrique et/ou électronique (4) assemblé dans la cavité de réception d'un dispositif de traitement thermique (2) selon l'une quelconque des revendications 1 à 9.

## Patentansprüche

1. Vorrichtung zur Wärmebehandlung (2) mindestens eines elektrischen und/oder elektronischen Elements (4), welche mindestens ein starres Stützteil (6), eine Fluidrückgewinnungsplatte (10) und eine Fluidverteilungsplatte (8) umfasst, wobei jede der Platten (8, 10) beiderseits des starren Stützteils (6) entlang einer vertikalen Richtung (V) dieses starren Stützteils (6) angeordnet ist, wobei die Vorrichtung zur Wärmebehandlung (2) **dadurch gekennzeichnet ist, dass** das starre Stützteil (6) mindestens einen Hohlraum zur Aufnahme (12) des mindestens einen elektrischen und/oder elektronischen Elements (4) und mindestens einen Kanal (14), der parallel zum Aufnahmehohlraum (12) in der vertikalen Richtung (V) ausgebildet ist und an der Ausbildung eines Wärmeregulierungsmittels (16) beteiligt ist, umfasst.

2. Vorrichtung zur Wärmebehandlung (2) nach dem vorhergehenden Anspruch, wobei der Aufnahmehohlraum (12) und der Kanal (14) des starren Stützteils (6) beiderseits des starren Stützteils (6) entlang seiner vertikalen Richtung (V) münden.

3. Vorrichtung zur Wärmebehandlung (2) nach einem der vorhergehenden Ansprüche, wobei das starre Stützteil (6) mehrere Kanäle (14) aufweist, die in dem starren Stützteil (6) ausgebildet sind, wobei sie gleichmäßig um den Aufnahmehohlraum (12) herum verteilt sind.

4. Vorrichtung zur Wärmebehandlung (2) nach einem der vorhergehenden Ansprüche, wobei die Fluidverteilungsplatte (8) mindestens eine Verdickung (24) umfasst, die von einer Innenseite (26) gegenüber dem starren Stützteil (6) vorsteht und von einer Öffnung (28) durchbrochen ist, wobei die Fluidverteilungsplatte (8) an dem starren Stützteil (6) anliegend angeordnet ist, derart, dass die Öffnung (28) direkt gegenüber von dem mindestens einen Aufnahmehohlraum (12) des starren Stützteils (6) angeordnet ist, und derart, dass sich die Verdickung (24) zwischen dem Aufnahmehohlraum (12) und dem Kanal (14) in Kontakt mit dem starren Stützteil (6) befindet.

5. Vorrichtung zur Wärmebehandlung (2) nach dem vorhergehenden Anspruch, wobei die Fluidverteilungsplatte (8) einen erhöhten Rand (30) umfasst, wobei die mindestens eine Verdickung (24) und der erhöhte Rand (30) daran beteiligt sind, mindestens eine Zirkulationsleitung (32) eines Fluids zu begrenzen, die mit dem mindestens einen Kanal (14) in Fluidverbindung steht.

6. Vorrichtung zur Wärmebehandlung (2) nach dem vorhergehenden Anspruch, wobei die Fluidverteilungsplatte (8) einen Fluideinlass (34) umfasst, der mit der Zirkulationsleitung (32) des Fluids in Fluidverbindung steht.

7. Vorrichtung zur Wärmebehandlung (2) nach einem der vorhergehenden Ansprüche, wobei die Fluidrückgewinnungsplatte (10) eine Wannenform aufweist, wobei mindestens eine Verschlussplatte (50) zwischen dem starren Stützteil (6) und der Fluidrückgewinnungsplatte (10) angeordnet ist, wobei die Verschlussplatte (50) dafür ausgelegt ist, eine Verschlusswand des mindestens einen Aufnahmehohlraums (12) zu bilden und mindestens einen Durchbruch (52) aufzuweisen, der gegenüber dem mindestens einen Kanal angeordnet ist.

8. Vorrichtung zur Wärmebehandlung (2) nach einem der vorhergehenden Ansprüche, wobei mindestens eine Dichtfolie (44, 56) zwischen dem starren Stützteil (6) und der Fluidverteilungsplatte (8) und/oder der Fluidrückgewinnungsplatte (10) angeordnet ist, wobei die Dichtfolie (44, 56) lokal durchbrochen ist, um Durchlässe (46, 58) gegenüber dem mindestens einen Kanal (14) zu bilden.

9. Vorrichtung zur Wärmebehandlung (2) nach einem der vorhergehenden Ansprüche, wobei sich mindestens ein dichter Mantel (60) im Kanal (14) des starren Stützteils (6) erstreckt, derart, dass er den Kanal (14) in zwei verschiedene und zueinander dichte Volumina (62) zerteilt.

10. Elektronisches Fahrzeugsystem (1), welches mindestens ein elektrisches und/oder elektronisches Element (4) umfasst, das im Aufnahmehohlraum einer Vorrichtung zur Wärmebehandlung (2) nach einem der Ansprüche 1 bis 9 montiert ist.

## Claims

1. Device (2) for heat treatment of at least one electrical and/or electronic element (4), comprising at least one rigid support piece (6), a fluid recovery plate (10) and a fluid distribution plate (8), each of said plates (8, 10) being disposed on either side of the rigid support piece (6) in a vertical direction (V) of said rigid support piece (6), the heat treatment device (2) being **characterized in that** the rigid support piece (6) comprises at least one cavity (12) for receiving the at least one electrical and/or electronic element (4) and at least one channel (14) formed parallel to the receiving cavity (12) in the vertical direction (V) and participating in forming a thermal regulation means (16).

2. Heat treatment device (2) according to the preceding claim, wherein the receiving cavity (12) and the channel (14) of the rigid support piece (6) open on either side of said rigid support piece (6) in its vertical direction (V) .

3. Heat treatment device (2) according to either of the preceding claims, wherein the rigid support piece (6) has a plurality of channels (14) that are formed in the rigid support piece (6), being distributed regularly around the receiving cavity (12).

4. Heat treatment device (2) according to any one of the preceding claims, wherein the fluid distribution plate (8) comprises at least one overthickness (24) protruding from an internal face (26) facing the rigid support piece (6) and pierced with an opening (28), the fluid distribution plate (8) being disposed against the rigid support piece (6) such that said opening (28) is disposed in line with the at least one receiving cavity (12) of the rigid support piece (6), and such that said overthickness (24) is in contact with the rigid support piece (6) between said receiving cavity (12) and the channel (14).

5. Heat treatment device (2) according to the preceding claim, wherein the fluid distribution plate (8) comprises a raised edge (30), the at least one overthickness (24) and the raised edge (30) participating in delimiting at least one circulation duct (32) for a fluid that is in fluidic communication with the at least one channel (14).

6. Heat treatment device (2) according to the preceding claim, wherein the fluid distribution plate (8) comprises a fluid inlet (34) in fluidic communication with the fluid circulation duct (32).

7. Heat treatment device (2) according to any one of the preceding claims, wherein the fluid recovery plate (10) has a tub shape, at least one closure plate (50) being disposed between the rigid support piece (6) and the fluid recovery plate (10), said closure plate (50) being configured to form a wall for closure of the at least one receiving cavity (12) and to have at least one perforation (52) disposed facing the at least one channel.

8. Heat treatment device (2) according to any one of the preceding claims, wherein at least one sealing sheet (44, 56) is disposed between the rigid support piece (6) and one and/or the other of the fluid distribution plate (8) and the fluid recovery plate (10), the sealing sheet (44, 56) being pierced locally so as to form orifices (46, 58) facing the at least one channel (14).

9. Heat treatment device (2) according to any one of the preceding claims, wherein at least one sealed sheath (60) extends in the channel (14) of the rigid support piece (6) such that it separates said channel (14) into two volumes (62) that are separate and sealed with respect to one another.

10. Vehicle electronic system (1) comprising at least one electrical and/or electronic component (4) assembled in the receiving cavity of a heat treatment device (2) according to any one of Claims 1 to 9.
